# EUROPÄISCHE PATENTANMELDUNG

(11) **EP 4 184 237 A1**
(43) Veröffentlichungstag der Anmeldung: **24.05.2023**
(21) Anmeldenummer: 21208688.8
(22) Anmeldetag: 17.11.2021
(51) Int. Cl.: G02B 27/64, G01C 15/00, G02B 5/00, G02B 19/00, G02B 27/09, G02B 27/14

(54) **OPTISCHES SYSTEM ZUR ERZEUGUNG EINER 360°-LASERLINIE**

(71) Anmelder: Hilti Aktiengesellschaft, 9494 Schaan (LI)
(72) Erfinder: Dang, Lieu-Kim, 9473 Gams (CH)
(74) Vertreter: Hilti Aktiengesellschaft Corporate Intellectual Property

(57) **Zusammenfassung**

Optisches System (14) zur Erzeugung einer 360°-Laserline (50A, 50B), aufweisend eine erste Kegeloptik (21), die in Form eines ersten Negativkegelabschnitts mit einer ersten Kegelachse (26) ausgebildet ist und die eine kegelförmige erste innere Mantelfläche (27) mit einem ersten Öffnungswinkel, eine kegelförmige erste äussere Mantelfläche (28) und eine erste Kegelspitze (29) aufweist, und eine zweite Kegeloptik (22), die in Form eines zweiten Negativkegelabschnitts mit einer zweiten Kegelachse (30) ausgebildet ist und die eine kegelförmige zweite innere Mantelfläche (31) mit einem zweiten Öffnungswinkel und eine zweite äussere Mantelfläche (32) aufweist. Das optische System (14) umfasst eine weitere Kegeloptik (24), die eine Kegelachse (33), einen Kegelmantel (35) mit einem Öffnungswinkel (2*α) und eine Kegelspitze (36) aufweist, wobei der Öffnungswinkel (2*α) des Kegelmantels (35) von 90° verschieden ist.

## Beschreibung

### Technisches Gebiet

Die vorliegende Erfindung betrifft ein optisches System zur Erzeugung einer 360°-Laserlinie gemäß dem Oberbegriff des Anspruchs 1.

### Stand der Technik

Um Nivellier- oder Markierungsarbeiten im Innen- und Außenbereich durchzuführen, sind Lasersysteme bekannt, die auf einer Projektionsfläche eine linienförmige Lasermarkierung erzeugen. Bei diesen Lasersystemen wird unterschieden zwischen Rotationslasern, die die linienförmige Lasermarkierung durch Rotation einer Strahlumlenkoptik um eine Rotationsachse erzeugen, und Linienlasern, die die linienförmige Lasermarkierung mithilfe einer Strahlformungsoptik, beispielsweise einer Zylinderlinse, einem Prisma oder einem Kegelspiegel, erzeugt. Damit die bekannten Lasersystemen ohne Schutzmaßnahmen in Form von Schutzbrillen und Reflektoren eingesetzt werden können, muss die Laserleistung begrenzt werden, um Schäden des menschlichen Auges zu verhindern. Für Lasersysteme der Laserklasse 2 oder 2M beträgt die maximal zulässige Laserleistung 1 mW.

Durch die Begrenzung der Laserleistung auf Werte kleiner als 1 mW weisen bekannte Lasersysteme der Laserklasse 2 oder 2M den Nachteil auf, dass die linienförmige Lasermarkierung auf der Projektionsfläche schlecht sichtbar ist. Dabei gilt, dass die linienförmige Lasermarkierung umso schlechter sichtbar ist, je breiter die Lasermarkierung auf der Projektionsfläche ist, da die Sichtbarkeit mit sinkender Leistungsdichte abnimmt. Außerdem ist die Qualität der linienförmigen Lasermarkierung auf der Projektionsfläche vom Abstand des Lasersystem zur Projektionsfläche abhängig.

EP 2 411 762 B1 offenbart ein Lasersystem mit einem optischem System zur Erzeugung einer 360°-Laserlinie. Das Lasersystem umfasst eine Laserstrahlquelle, die einen divergenten Laserstrahl erzeugt und entlang einer Ausbreitungsrichtung aussendet, eine als Kollimationsoptik ausgebildete Strahlformungsoptik, die den divergenten Laserstrahl in einen kollimierten Laserstrahl umformt, und einen Kegelspiegel, der als gerader Kegel mit einer Kegelachse und einer reflektierenden Mantelfläche ausgebildet ist. Der Kegelspiegel ist im Strahlengang des Laserstrahls hinter der Kollimationsoptik angeordnet und die Kegelachse ist koaxial zur optischen Achse der Kollimationsoptik ausgerichtet.

Das aus EP 2 411 762 B1 bekannte Lasersystem weist den Nachteil auf, dass auf einer Projektionsfläche keine scharf begrenzte Laserlinie erzeugt wird. Die Laserlinie besteht aus einer Hauptlinie und mindestens einer Nebenlinie. Die Ursache für das Auftreten mehrerer Linien liegt darin, dass die Laserstrahlquelle einen Laserstrahl mit mehreren Beugungsordnungen erzeugt, die an der Kegelspitze des Kegelspiegels unterschiedlich gebeugt werden und auf der Projektionsfläche als benachbarte Linien auftreten.

WO 2018/108411 A1 offenbart ein weiteres bekanntes Lasersystem mit einem optischen System zur Erzeugung einer 360°-Laserlinie. Das optische System weist eine erste Kegeloptik und eine zweite Kegeloptik auf. Die erste Kegeloptik ist in Form eines ersten Negativkegelabschnitts mit einer ersten Kegelachse ausgebildet und weist eine kegelförmige erste innere Mantelfläche mit einem ersten Öffnungswinkel, eine kegelförmige erste äussere Mantelfläche und eine erste Kegelspitze auf. Die zweite Kegeloptik ist in Form eines zweiten Negativkegelabschnitts mit einer zweiten Kegelachse ausgebildet und weist eine kegelförmige zweite innere Mantelfläche mit einem zweiten Öffnungswinkel und eine zweite äussere Mantelfläche auf.

Das aus WO 2018/108411 A1 bekannte Lasersystem weist den Nachteil auf, dass auf einer Projektionsfläche keine scharf begrenzte Laserlinie erzeugt wird. Die Laserlinie besteht aus einer Hauptlinie und mindestens einer Nebenlinie.

### Darstellung der Erfindung

Die Aufgabe der vorliegenden Erfindung besteht in der Entwicklung eines optischen Systems, mit dem auf einer Projektionsfläche eine scharf begrenzte Laserlinie mit einem Öffnungswinkel von 360° erzeugt werden kann.

Diese Aufgabe wird bei dem eingangs genannten optischen System erfindungsgemäß durch die Merkmale des unabhängigen Anspruchs 1 gelöst. Vorteilhafte Weiterbildungen sind in den abhängigen Ansprüchen angegeben.

Erfindungsgemäß ist das optische System gekennzeichnet durch eine weitere Kegeloptik, die eine Kegelachse, einen Kegelmantel mit einem Öffnungswinkel und eine Kegelspitze aufweist, wobei der Öffnungswinkel des Kegelmantels von 90° verschieden ist.

Der Kegelmantel der weiteren Kegeloptik ist so ausgebildet, dass sein Öffnungswinkel von 90° verschieden ist und der Kegelmantel als Strahlteilungsoptik für einen auftreffenden Laserstrahl fungieren kann. Ein auftreffender Laserstrahl wird an der Kegelspitze der weiteren Kegeloptik in zwei Strahlhälften (linker und rechter Laserstrahl) unterteilt, die das optische System auf verschiedenen Wegen umlenkt. Die beiden Strahlhälften werden jeweils in einen transmittierten und reflektierten Teilstrahl aufgeteilt.

Der von 90° verschiedene Öffnungswinkel des Kegelmantels stellt sicher, dass die Einfallswinkel des transmittierten und reflektierten Teilstrahls voneinander verschieden sind und die Abhängigkeit des Transmissionsgrades vom Einfallswinkel genutzt werden kann. Der umgelenkte Laserstrahl setzt sich aus einem transmittierten Teilstrahl der einen Strahlhälfte und einem reflektierten Teilstrahl der anderen Strahlhälfte zusammen, so dass der umgelenkte Laserstrahl, der das optische System verlässt, sämtliche Beugungsordnungen aufweist und auf einer Projektionsfläche eine scharf begrenzte Laserlinie mit einem Öffnungswinkel von 360° erzeugen kann.

Bevorzugt weist der Kegelmantel bei einem Einfallswinkel von 90°- α zur Flächennormalen ein Verhältnis von Transmissionsgrad T zu Reflexionsgrad R von T: R = 50 : 50 ± 10 % auf. Bei einem Kegelmantel mit einem Öffnungswinkel von 2*α trifft ein Laserstrahl unter einem Einfallswinkel von 90°- α zur Flächennormalen auf den Kegelmantel. Das T : R-Verhältnis von 50 : 50 ± 10 % für den Einfallswinkel von 90°- α führt dazu, dass der Kegelmantel als Strahlteiler fungiert und den Laserstrahl in einen transmittierten Teilstrahl und reflektierten Teilstrahl unterteilt. Die Strahlleistung des transmittierten Teilstrahls liegt bei 50 % ± 10 % und die Strahlleistung des reflektierten Teilstrahls bei 50 % ± 10 %; der Verlust durch Absorption im Kegelmantel kann vernachlässigt werden.

Besonders bevorzugt weist der Kegelmantel bei einem Einfallswinkel von 3*α - 90° zur Flächennormalen einen Transmissionsgrad T grösser als 90 % auf. Bei einem Kegelmantel mit einem Öffnungswinkel von 2*α trifft der zuerst reflektierte Teilstrahl unter einem Einfallswinkel von 3*α - 90° zur Flächennormalen auf die gegenüberliegende Seite des Kegelmantels. Der Transmissionsgrad T grösser als 90 % für den Einfallswinkel von 3*α - 90° führt dazu, dass der reflektierte Teilstrahl an der gegenüberliegenden Seite des Kegelmantels überwiegend transmittiert wird.

Der umgelenkte Laserstrahl setzt sich aus einem oberen Teilstrahl und einem unteren Teilstrahl zusammen, die auf verschiedenen Wegen durch das erfindungsgemäße optische System umgelenkt werden. Das erfindungsgemäße optische System hat den Vorteil, dass der umgelenkte Laserstrahl sämtliche Beugungsordnungen aufweist und daher auf einer Projektionsfläche eine scharf begrenzte Laserlinie erzeugen kann.

Bevorzugt stimmt der erste Öffnungswinkel der ersten inneren Mantelfläche mit dem Öffnungswinkel des Kegelmantels überein. Der durch den Kegelmantel transmittierte Teilstrahl trifft auf die erste innere Mantelfläche der ersten Kegeloptik. Bei einem Öffnungswinkel der ersten inneren Mantelfläche (erster Öffnungswinkel) von 2*α liegt Totalreflektion vor und der transmittierte Teilstrahl wird an der ersten inneren Mantelfläche totalreflektiert.

Bevorzugt fällt die erste Kegelspitze der ersten Kegeloptik mit der Kegelspitze der weiteren Kegeloptik zusammen. Ein optisches System, bei dem die erste Kegelspitze mit der Kegelspitze der weiteren Kegeloptik zusammenfällt, ermöglicht einen kompakten Aufbau des optischen Systems mit einer geringen Höhe und kann die Befestigung der verschiedenen Optiken erleichtern.

Bevorzugt ist die erste Kegeloptik in einen Grundkörper integriert, der eine kegelförmige Aussparung für die weitere Kegeloptik aufweist, wobei die Kegelform der Aussparung der weiteren Kegeloptik entspricht. Die kegelförmige Aussparung im Grundkörper eignet sich als Aufnahme für die weitere Kegeloptik und ermöglicht einen kompakten Aufbau des optischen Systems mit einer geringen Höhe und kann die Befestigung der verschiedenen Optiken erleichtern.

Besonders bevorzugt ist die zweite Kegeloptik in den Grundkörper integriert und mit der ersten Kegeloptik einteilig ausgebildet. Die einteilige Ausbildung der ersten und zweiten Kegeloptik hat den Vorteil, dass nach der Herstellung des Grundkörpers keine Justierung der ersten und zweiten Kegeloptik zueinander notwendig ist und keine Grenzfläche zwischen der ersten Kegeloptik und zweiten Kegeloptik vorhanden ist. Da die erste und zweite Kegeloptik aus dem gleichen optischen Material gefertigt sind, wirken sich Temperaturschwankungen auf die erste und zweite Kegeloptik gleich aus.

Bevorzugt sind die erste Kegelachse der ersten Kegeloptik, die zweite Kegelachse der zweiten Kegeloptik und die Kegelachse der weiteren Kegeloptik koaxial zueinander angeordnet. Durch die koaxiale Anordnung der Kegelachsen der ersten, zweiten und weiteren Kegeloptik kann eine symmetrische Laserlinie mit einem Öffnungswinkel von 360° erzeugt werden und die Strahlleistung des Laserstrahls kann gleichmäßig über den Öffnungswinkel von 360° verteilt werden.

Bevorzugt umfasst das optische System eine Zylinderoptik, die mit der weiteren Kegeloptik einteilig ausgebildet ist. Durch die Zylinderoptik kann die Befestigung der verschiedenen Optiken des optischen Systems erleichtert werden. Die Zylinderoptik ist einteilig ausgebildet mit der weiteren Kegeloptik, die über eine kegelförmige Aussparung mit der ersten und zweiten Kegeloptik verbunden werden kann. Das optische System benötigt lediglich eine Halterung, die an der Mantelfläche der Zylinderoptik angebracht werden kann.

Die vorliegende Anmeldung betrifft weiterhin ein Lasersystem zur Erzeugung einer 360° Laserline, das eine Strahlquelle und ein erfindungsgemäßes optisches System aufweist. Die Strahlquelle erzeugt einen Laserstrahl, der vom optischen System umgelenkt wird.

Bevorzugt weist der Laserstrahl, den die Strahlquelle erzeugt, eine Strahlverteilung in Form einer Gauß-Verteilung, einer Lorentz-Verteilung oder einer Bessel-Verteilung auf. Diese Strahlverteilungen weisen keinen abrupten Sprung der Intensität auf und unterstützen die Erzeugung einer scharf begrenzten Laserlinie auf einer Projektionsfläche.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIG. 1: ein erfindungsgemäßes Lasersystem, das eine Laserstrahlquelle, eine Kolli-mationsoptik und ein erfindungsgemäßes optisches System aufweist;
- FIGN. 2A, B: das erfindungsgemäße optische System des Lasersystems der FIG. 1, wobei die Komponenten im unverbundenen Zustand (FIG. 2A) und im verbundenen Zustand (FIG. 2B) gezeigt werden;
- FIGN. 3A, B: den Strahlengang eines linken Laserstrahls (FIG. 3A) und eines rechten La-serstrahls (FIG. 3B) im erfindungsgemäßen optischen System der FIG. 2;
- FIG. 4: das optische System der FIG. 2 mit einem umgelenkten Laserstrahl, der aus oberen und unteren Teilstrahlen zusammengesetzt ist;
- FIG. 5: eine weitere Ausführungsform eines erfindungsgemäßen optischen Systems mit einer Kollimationsoptik, die in das optische System integriert ist; und
- FIGN. 6A, B: den Strahlengang eines linken Laserstrahls (FIG. 6A) und eines rechten La-serstrahls (FIG. 6B) im erfindungsgemäßen optischen System der FIG. 5.

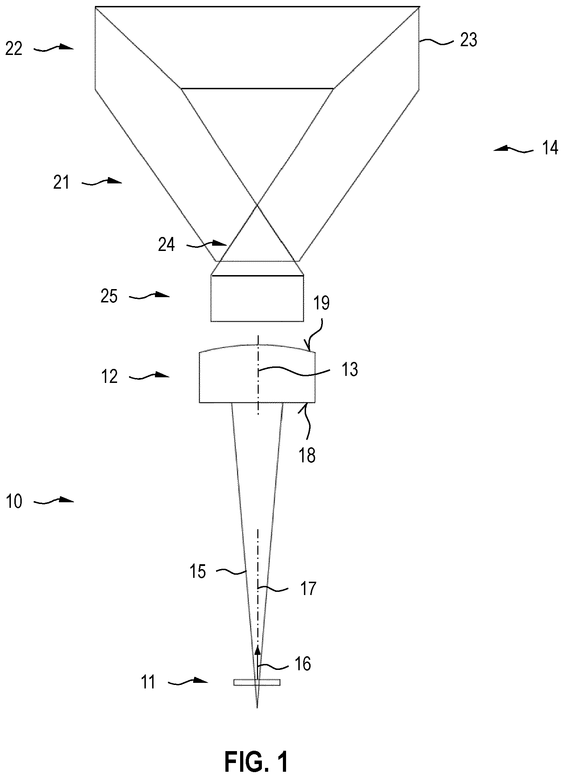

**FIG. 1** zeigt ein erfindungsgemäßes Lasersystem **10** zur Erzeugung einer 360°-Laserlinie auf einer Projektionsfläche. Das Lasersystem 10 umfasst eine Laserstrahlquelle **11,** eine als Kollimationsoptik ausgebildete Strahlformungsoptik **12** mit einer optischen Achse **13** und ein erfindungsgemäßes optisches System **14.** Die Komponenten des Lasersystems 10 sind in der Reihenfolge Laserstrahlquelle 11, Strahlformungsoptik 12 und optisches System 14 angeordnet.

Die Laserstrahlquelle 11 kann als Halbleiterlaser mit einer Wellenlänge im sichtbaren Spektrum ausgebildet sein, beispielsweise als roter Halbleiterlaser mit einer Wellenlänge von 635 nm oder als grüner Halbleiterlaser mit einer Wellenlänge zwischen 510 und 555 nm. Die Eigenschaften der weiteren optischen Komponenten 12, 14 des Lasersystems 10 sind an die Wellenlänge der Laserstrahlquelle 11 angepasst.

Die Laserstrahlquelle 11 erzeugt einen divergenten Laserstrahl **15,** der entlang einer Ausbreitungsrichtung **16** ausgesandt wird; ohne ein zusätzliches optisches Element in der Laserstrahlquelle 11 ist der Laserstrahl 15 divergent. Als optische Achse **17** des Laserstrahls 15 ist die Symmetrieachse der Strahlverteilung definiert. Der Laserstrahl 15 weist bevorzugt eine Strahlverteilung in Form einer Gauß-Verteilung, einer Lorentz-Verteilung oder einer Bessel-Verteilung auf. Diese Strahlverteilungen weisen keinen abrupten Sprung der Intensität auf und unterstützen die Erzeugung einer scharf begrenzten Laserlinie auf einer Projektionsfläche.

Die Kollimationsoptik 12 weist im Ausführungsbeispiel eine plane Eintrittsfläche **18** und eine gekrümmte Austrittsfläche **19** auf. Alternativ kann die Eintrittsfläche 18 als gekrümmte Fläche und die Austrittsfläche 19 als plane Fläche ausgebildet sein oder die Ein- und Austrittsflächen 18, 19 sind als gekrümmte Flächen ausgebildet. Als optische Achse 13 der Kollimationsoptik 12 ist eine Gerade definiert, die durch den Krümmungsmittelpunkt der gekrümmten Fläche verläuft und senkrecht auf der planen Fläche steht oder bei zwei gekrümmten Flächen durch die Krümmungsmittelpunkte der gekrümmten Flächen verläuft.

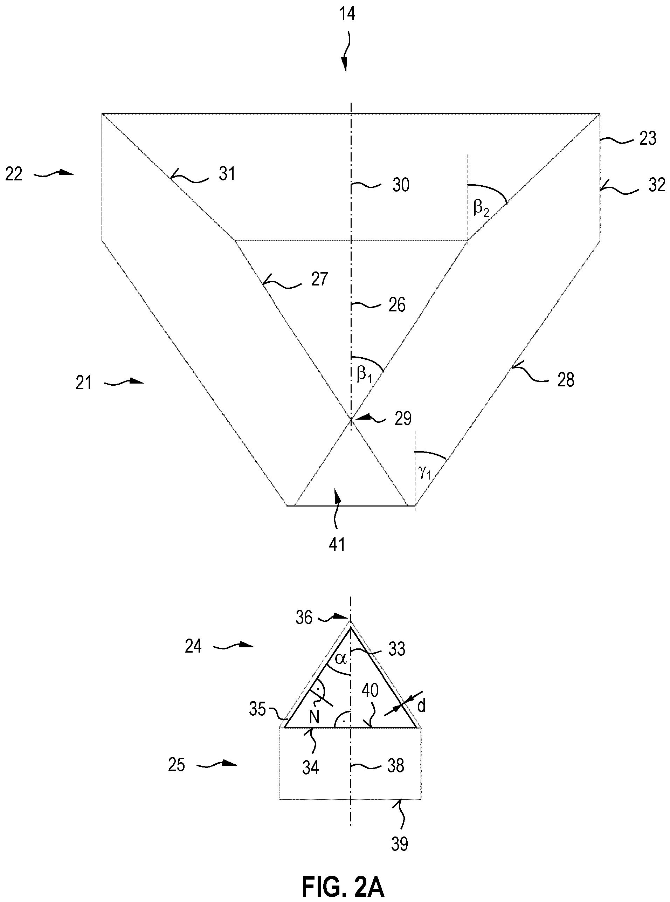

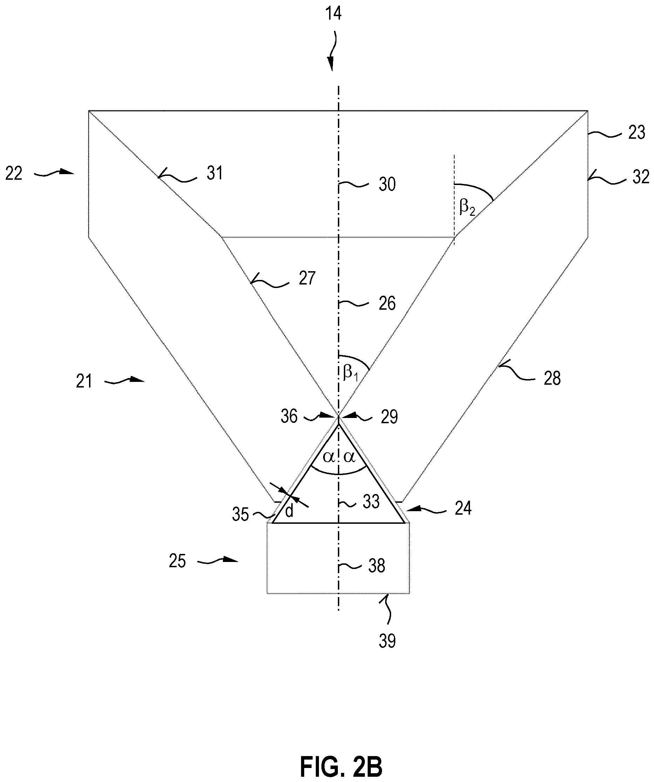

**FIGN. 2A****, B** zeigen das erfindungsgemäße optische System 14 des Lasersystems 10 im Detail. Das optische System 14 weist eine erste Kegeloptik **21** und eine zweite Kegeloptik **22** auf, die in einen Grundkörper **23** integriert sind, sowie eine weitere Kegeloptik **24** und eine Zylinderoptik **25,** die optional ist und die Befestigung der weiteren Kegeloptik 24 erleichtert. FIG. 2A zeigt den Grundkörper 23 mit der ersten und zweiten Kegeloptik 21, 22 sowie die weitere Kegeloptik 24 in einem unverbundenen Zustand und FIG. 2B zeigt die weitere Kegeloptik 24, die mit dem Grundkörper 23 verbunden ist.

Die erste Kegeloptik 21 ist in Form eines ersten Negativkegelabschnitts mit einer ersten Kegelachse **26** ausgebildet und weist eine kegelförmige erste innere Mantelfläche **27,** eine kegelförmige erste äussere Mantelfläche **28** und eine erste Kegelspitze **29** auf. Die erste innere Mantelfläche 27 schließt einen ersten Beta-Winkel β₁ mit der ersten Kegelachse 26 ein und die erste äussere Mantelfläche 28 schließt einen ersten Gamma-Winkel γ₁ mit der ersten Kegelachse 26 ein. Der Öffnungswinkel der ersten inneren Mantelfläche 27, der als erster Öffnungswinkel bezeichnet wird, entspricht dem doppelten des ersten Beta-Winkels 2*β₁ und der Öffnungswinkel der ersten äusseren Mantelfläche 28 entspricht dem doppelten des ersten Gamma-Winkels 2*γ₁.

Die zweite Kegeloptik 22 ist in Form eines zweiten Negativkegelabschnitts mit einer zweiten Kegelachse **30** ausgebildet und weist eine kegelförmige zweite innere Mantelfläche 31 und eine zweite äussere Mantelfläche **32** auf. Die zweite innere Mantelfläche 31 schließt einen zweiten Beta-Winkel β₂ mit der zweiten Kegelachse 30 ein und der Öffnungswinkel der zweiten inneren Mantelfläche 31, der als zweiter Öffnungswinkel bezeichnet wird, entspricht dem doppelten des zweiten Beta-Winkels 2*β₂. Die zweite äussere Mantelfläche 32 ist im Ausführungsbeispiel zylinderförmig ausgebildet und schließt mit der zweiten Kegelachse 30 keinen Winkel ungleich 0° ein. Alternativ kann die zweite äussere Mantelfläche 32 kegelförmig ausgebildet sein und einen Winkel ungleich 0° mit der zweiten Kegelachse 30 einschließen.

Beim optischen System 14 sind die erste und zweite Kegeloptik 21, 22 in den Grundkörper 23 integriert und einteilig ausgebildet. Die einteilige Ausbildung der ersten und zweiten Kegeloptik 21, 22 hat den Vorteil, dass nach der Herstellung des Grundkörpers 23 keine Justierung der ersten und zweiten Kegeloptik 21, 22 zueinander notwendig ist und keine Grenzfläche zwischen der ersten Kegeloptik 21 und zweiten Kegeloptik 22 vorhanden ist. Da die erste und zweite Kegeloptik 21, 22 aus dem gleichen Material gefertigt sind, wirken sich Temperaturschwankungen auf die erste und zweite Kegeloptik 21, 22 gleich aus. Alternativ können die erste Kegeloptik 21 und zweite Kegeloptik 22 mehrteilig ausgebildet sein.

Die weitere Kegeloptik 24 ist als Positivkegel mit einer Kegelachse **33** ausgebildet und weist eine kreisförmige Grundfläche **34,** einen Kegelmantel **35** mit einer Dicke **d** und eine Kegelspitze **36** auf. Der Kegelmantel 35 schließt einen Alpha-Winkel α mit der Kegelachse 33 ein und der Öffnungswinkel des Kegelmantels 35 entspricht dem doppelten Alpha-Winkel 2*α, wobei der Öffnungswinkel 2*α des Kegelmantels 35 von 90° verschieden ist. Der Kegelmantel 35 ist aus einem Material gefertigt, das sich in mindestens einer der folgenden Eigenschaften von der sonstigen weiteren Kegeloptik 24 unterscheidet: Brechungsindex n, Transmissionsgrad T und Reflexionsgrad R. Der Kegelmantel 35 kann beispielsweise als Beschichtung aufgetragen werden; als Materialien für den Kegelmantel 35 eignen sich sämtliche dielektrischen Materialien und Metalle, beispielsweise Silber (Ag), Aluminium (AI), Silberdioxid (SiO₂) und Titandioxid (TiO₂).

Die Zylinderoptik 25 ist zylinderförmig mit einer Zylinderachse **38** ausgebildet und weist eine plane Eintrittsfläche **39** und eine plane Austrittsfläche **40** auf, die für die Wellenlänge und Polarisation der Laserstrahlquelle 11 als Transmissionsflächen ausgebildet sind. Der Transmissionsgrad T der Ein- und Austrittsfläche 39, 40 hängt unter anderem vom Einfallswinkel und der Polarisation eines auftreffenden Laserstrahls sowie vom Brechungsindex n ab. Da die Zylinderoptik 25 und weitere Kegeloptik 24 einteilig ausgebildet sind, fällt die Grundfläche 34 der weiteren Kegeloptik 24 mit der Austrittsfläche 40 der Zylinderoptik 25 zusammen. Als Materialien für die Zylinderoptik 25 und weitere Kegeloptik 24 eignen sich Glas, Kunststoff, etc.

Der Grundkörper 23 weist eine kegelförmige Aussparung **41** auf, die als Aufnahme für die weitere Kegeloptik 24 dient. FIG. 2B zeigt die weitere Kegeloptik 24, die in der Aussparung 41 angeordnet und mit dem Grundkörper 23 verbunden ist. Die weitere Kegeloptik 24 ist so angeordnet, dass ihre Kegelspitze 36 der ersten Kegelspitze 29 der ersten inneren Mantelfläche 27 zugewandt ist und mit dieser zusammenfällt. Außerdem stimmen der erste Öffnungswinkel 2*β₁ der ersten inneren Mantelfläche 27 und der Öffnungswinkel 2*α des Kegelmantels 35 überein.

Der erste Öffnungswinkel 2*β₁ der ersten inneren Mantelfläche 27, der Öffnungswinkel 2*γ₁ der ersten äusseren Mantelfläche 28 und der zweite Öffnungswinkel 2*β₂ der zweiten inneren Mantelfläche 31 sind so aufeinander abgestimmt, dass ein auftreffender Laserstrahl insgesamt um 90° umgelenkt wird und die Teilstrahlen an den Mantelflächen 27, 28, 31 total reflektiert werden.

Die erste Kegeloptik 21, die zweite Kegeloptik 22 und die weitere Kegeloptik 24 sind so angeordnet, dass die erste Kegelachse 26, die zweite Kegelachse 30 und die Kegelachse 33 koaxial zueinander angeordnet sind. Durch die koaxiale Anordnung der Kegelachsen 26, 30, 37 kann eine symmetrische Laserlinie mit einem Öffnungswinkel von 360° erzeugt werden und die Strahlleistung des Laserstrahls kann gleichmäßig über den Öffnungswinkel von 360° verteilt werden.

Bei der Herstellung des optischen Systems 14 kann der Kegelmantel 35 in einer Variante auf den Positivkegel aufgetragen und mit dem Positivkegel in der Aussparung 41 befestigt werden, beispielsweise durch Kleben mit einem geeigneten optischen Kleber. Alternativ kann der Kegelmantel 35 in der Aussparung 41 aufgetragen werden, anschließend wird der Positivkegel am Kegelmantel 35 befestigt, beispielsweise durch Kleben mit einem geeigneten optischen Kleber.

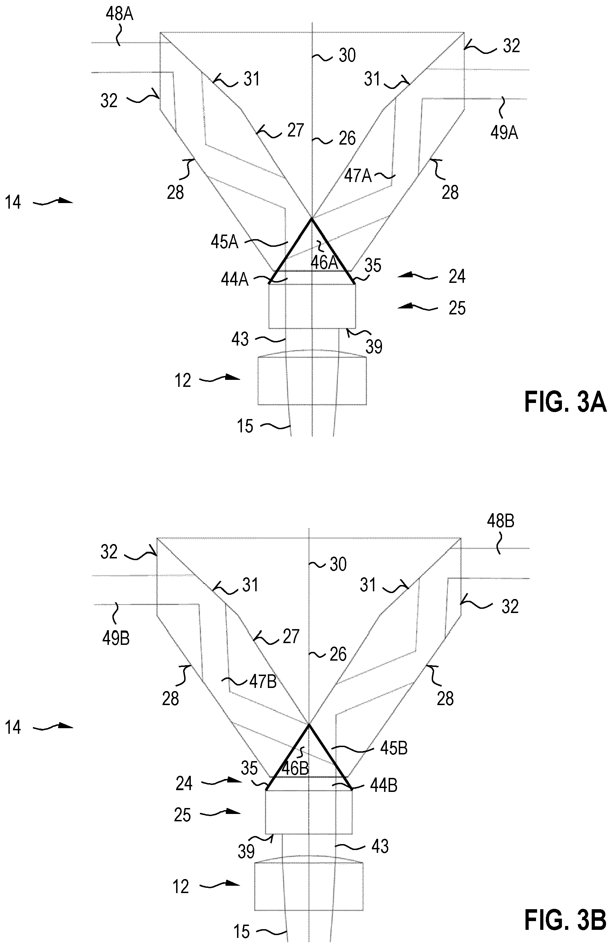

**FIGN. 3A****, B** zeigen den Strahlengang eines Laserstrahls im erfindungsgemäßen optischen System 14 des Lasersystems 10 der FIG. 1. Das optische System 14 umfasst die erste Kegeloptik 21, die zweite Kegeloptik 22 und die weitere Kegeloptik 24.

Die Laserstrahlquelle 11 erzeugt den divergenten Laserstrahl 15, der auf die Kollimationsoptik 12 trifft. Die Kollimationsoptik 12 formt den divergenten Laserstrahl 15 in einen kollimierten Laserstrahl **43** um, der auf die weitere Kegeloptik 24 trifft. Der kollimierte Laserstrahl 43 trifft auf die Eintrittsfläche 39 der Zylinderoptik 25, propagiert durch die Zylinderoptik 25 und die weitere Kegeloptik 24 und trifft auf den Kegelmantel 35.

Der Öffnungswinkel 2*α des Kegelmantels 35 ist von 90° verschieden und der Kegelmantel 35 fungiert als Strahlteilungsoptik für den kollimierten Laserstrahl 43. Der Laserstrahl 43 wird von der Kegelspitze 36 in einen linken Laserstrahl **44A** und einen rechten Laserstrahl **44B** unterteilt. FIG. 3A zeigt den Strahlengang des linken Laserstrahls 44A und FIG. 3B den Strahlengang des rechten Laserstrahls 44B. Die Eigenschaften des Kegelmantels 35 und der Öffnungswinkel 2*α sind so aufeinander abgestimmt, dass der auftreffende Laserstrahl 44A bzw. 44B in einen transmittierten Teilstrahl **45A, 45B** und einen reflektierten Teilstrahl **46A, 46B** aufgeteilt wird.

Der Einfallswinkel wird zwischen der Einfallsrichtung der Laserstrahlen und der Flächennormalen N gemessen. Der linke Laserstrahl 44A und rechte Laserstrahl 44B treffen jeweils unter einem Einfallswinkel von 90°- α zur Flächennormalen N auf den Kegelmantel 35. Bei einem Einfallswinkel von 90°- α zur Flächennormalen N weist der Kegelmantel 35 ein Verhältnis von Transmissionsgrad T zu Reflexionsgrad R von 50 : 50 ± 10 % auf; idealerweise liegt das Verhältnis T : R bei 50 : 50.

Der in FIG. 3A dargestellte linke Laserstrahl 44A wird in den transmittierten Teilstrahl 45A und reflektierten Teilstrahl 46A aufgeteilt. Der transmittierte Teilstrahl 45A tritt durch den Kegelmantel 35 in die linke Hälfte des Grundkörpers 23 ein, wird an der ersten inneren Mantelfläche 27, der ersten äusseren Mantelfläche 28 und der zweiten inneren Mantelfläche 31 dreifach durch Totalreflektion reflektiert und verlässt den Grundkörper 23 in der linken Hälfte an der zweiten äusseren Mantelfläche 32 als umgelenkter oberer Teilstrahl **48A.**

Der reflektierte Teilstrahl 46A trifft unter einem Einfallswinkel von 3*α - 90° zur Flächennormalen N auf die gegenüberliegende rechte Seite des Kegelmantels 35. Die Eigenschaften des Kegelmantels 35, insbesondere die Abhängigkeit des Transmissionsgrads vom Einfallswinkel, sind so abgestimmt, dass der Transmissionsgrad T für den Einfallswinkel von 3*α - 90° grösser als 90 % ist; idealerweise liegt T bei 99 %. Der reflektierte Teilstrahl 46A wird überwiegend transmittiert und tritt als Teilstrahl **47A** in die rechte Hälfte des Grundkörpers 23 ein. Der Teilstrahl 47A wird an der ersten äusseren Mantelfläche 28 und der zweiten inneren Mantelfläche 31 zweifach durch Totalreflektion reflektiert und verlässt den Grundkörper 23 in der rechten Hälfte an der zweiten äusseren Mantelfläche 32 als umgelenkter unterer Teilstrahl **49A.**

Der in FIG. 3B dargestellte rechte Laserstrahl 44B wird in den transmittierten Teilstrahl 45B und reflektierten Teilstrahl 46B aufgeteilt. Der transmittierte Teilstrahl 45B tritt durch den Kegelmantel 35 in die rechte Hälfte des Grundkörpers 23 ein, wird an der ersten inneren Mantelfläche 27, der ersten äusseren Mantelfläche 28 und der zweiten inneren Mantelfläche 31 dreifach durch Totalreflektion reflektiert und verlässt den Grundkörper 23 in der rechten Hälfte an der zweiten äusseren Mantelfläche 32 als umgelenkter oberer Teilstrahl **48B.**

Der reflektierte Teilstrahl 46B trifft unter einem Einfallswinkel von 3*α - 90° zur Flächennormalen N auf die gegenüberliegende linke Seite des Kegelmantels 35. Die Eigenschaften des Kegelmantels 35, insbesondere die Abhängigkeit des Transmissionsgrads vom Einfallswinkel, sind so abgestimmt, dass der Transmissionsgrad T für den Einfallswinkel von 3*α - 90° grösser als 90 % ist; idealerweise liegt T bei 99 %. Der reflektierte Teilstrahl 46B wird überwiegend transmittiert und tritt als Teilstrahl **47B** in die linke Hälfte des Grundkörpers 23 ein. Der Teilstrahl 47B wird an der ersten äusseren Mantelfläche 28 und der zweiten inneren Mantelfläche 31 zweifach durch Totalreflektion reflektiert und verlässt den Grundkörper 23 in der linken Hälfte an der zweiten äusseren Mantelfläche 32 als umgelenkter unterer Teilstrahl **49B.**

Der Öffnungswinkel 2*α des Kegelmantels 35 ist ungleich 90°, damit die Einfallswinkel der transmittierten Teilstrahlen 45A, 45B und reflektierten Teilstrahlen 46A, 46B voneinander verschieden sind. Die transmittierten Teilstrahlen 45A, 45B treffen unter einem Einfallswinkel von 90°- α zur Flächennormalen N auf den Kegelmantel 35 und die reflektierten Teilstrahlen 46A, 46B unter einem Einfallswinkel von 3*α - 90° zur Flächennormalen N. Bei einem Öffnungswinkel des Kegelmantels 35 von 90° würden sowohl die transmittierten Teilstrahlen 45A, 45B als auch die reflektierten Teilstrahlen 46A, 46B unter einem Einfallswinkel von 45° zur Flächennormalen N auf den Kegelmantel 35 auftreffen.

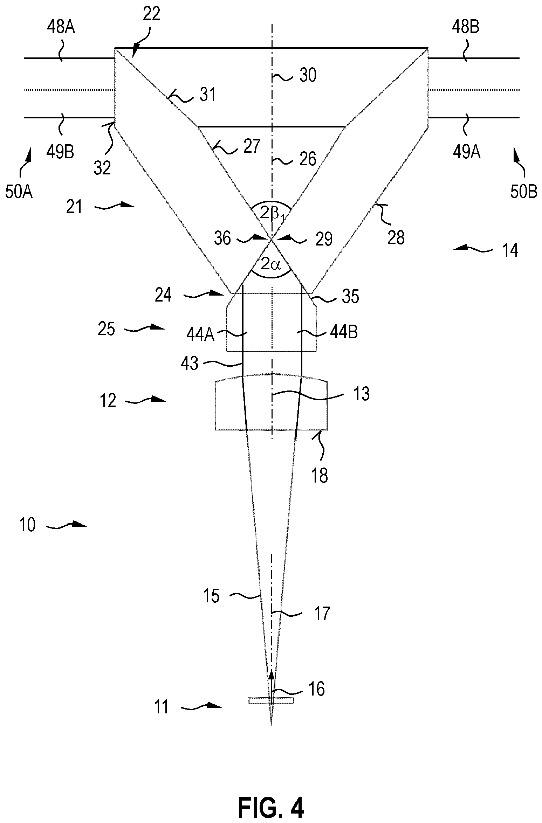

**FIG. 4** zeigt das optische System 14 der FIG. 2 mit einem umgelenkten Laserstrahl, der aus den Teilstrahlen 48A, 49A der FIG. 3A und den Teilstrahlen 48B, 49B der FIG. 3B zusammengesetzt ist.

Der umgelenkte obere Teilstrahl 48A und umgelenkte untere Teilstrahl 49B verlassen das optische System 14 und erzeugen eine linke 180°-Laserlinie **50A.** Der umgelenkte obere Teilstrahl 48B und umgelenkte untere Teilstrahl 49A verlassen das optische System 14 und erzeugen eine rechte 180°-Laserlinie **50B.** Die 360°-Laserlinie, die das optische System 14 erzeugt, wird aus der linken 180°-Laserlinie 50A und rechten 180°-Laserlinie 50B zusammengesetzt.

Der von 90° verschiedene Öffnungswinkel des Kegelmantels 35 stellt sicher, dass die Einfallswinkel der transmittierten und reflektierten Teilstrahlen voneinander verschieden sind und die Abhängigkeit des Transmissionsgrades vom Einfallswinkel genutzt werden kann. Der umgelenkte Laserstrahl setzt sich aus einem transmittierten Teilstrahl der einen Strahlhälfte und einem reflektierten Teilstrahl der anderen Strahlhälfte zusammen, so dass der umgelenkte Laserstrahl, der das optische System 14 verlässt, sämtliche Beugungsordnungen aufweist und auf einer Projektionsfläche eine scharf begrenzte Laserlinie mit einem Öffnungswinkel von 360° erzeugen kann.

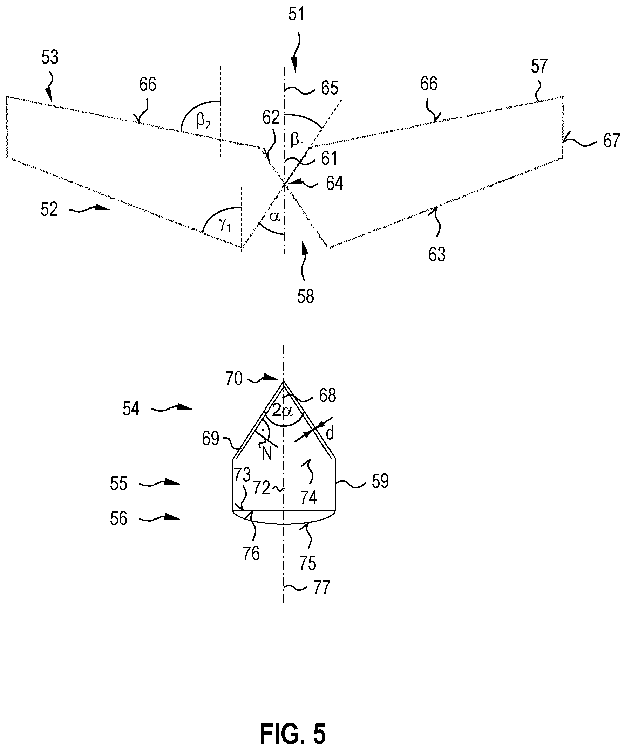

**FIG. 5** zeigt eine weitere Ausführungsform eines erfindungsgemäßen optischen Systems **51** mit einer ersten Kegeloptik **52,** einer zweiten Kegeloptik **53** und einer weiteren Kegeloptik **54.** Das optische System 51 unterscheidet sich vom optischen System 14 dadurch, dass eine Kollimationsoptik integriert ist; beim optischen System 14 ist die Kollimationsoptik als separate Optik ausgebildet.

Das optische System 51 weist neben den Kegeloptiken 52, 53, 54 eine Zylinderoptik **55** und eine Kollimationsoptik **56** auf. Dabei sind die Kegeloptiken 52, 53, 54 notwendige Optiken des optischen Systems 51, wohin gegen die Zylinderoptik 55 und die Kollimationsoptik 56 optionale Optiken sind.

Die erste Kegeloptik 52 und zweite Kegeloptik 53 sind in einen Grundkörper **57** integriert und einteilig ausgebildet. Der Grundkörper 57 weist eine kegelförmige Aussparung **58** auf, die als Aufnahme für die weitere Kegeloptik 54 dient. Die weitere Kegeloptik 54 ist mit der Zylinderoptik 55 und der Kollimationsoptik 56 einteilig ausgebildet; die Optiken 54, 55, 56 sind in einen weiteren Grundkörper **59** integriert.

Die erste Kegeloptik 52 ist wie die erste Kegeloptik 21 in Form eines ersten Negativkegelabschnitts mit einer ersten Kegelachse **61** ausgebildet und weist eine kegelförmige erste innere Mantelfläche **62** mit einem ersten Öffnungswinkel **2***β₁, eine kegelförmige erste äussere Mantelfläche **63** mit einem Öffnungswinkel **2***γ₁ und eine erste Kegelspitze **64** auf.

Die zweite Kegeloptik 53 ist wie die zweite Kegeloptik 22 in Form eines zweiten Negativkegelabschnitts mit einer zweiten Kegelachse **65** ausgebildet und weist eine kegelförmige zweite innere Mantelfläche **66** mit einem zweiten Öffnungswinkel **2***β₂ und eine zweite äussere Mantelfläche **67** auf.

Die weitere Kegeloptik 54 ist wie die weitere Kegeloptik 24 als Positivkegel mit einer Kegelachse **68** ausgebildet und weist eine kreisförmige Grundfläche, einen Kegelmantel **69** mit einem Öffnungswinkel **2*α** und eine Kegelspitze **70** auf. Der Öffnungswinkel 2*α des Kegelmantels 69 ist von 90° verschieden und der Kegelmantel 69 ist wie der Kegelmantel 35 aus einem Material gefertigt, das sich in mindestens einer der Eigenschaften Brechungsindex n, Transmissionsgrad T und Reflexionsgrad R von der sonstigen weiteren Kegeloptik 54 unterscheidet.

Der Kegelmantel 69 ist aus einem dielektrischen Material oder einem Metall gefertigt, beispielsweise Silber (Ag), Aluminium (AI), Silberdioxid (SiO₂) und Titandioxid (TiO₂). Der Kegelmantel 69 ist so ausgebildet, dass für einen Einfallswinkel von 90° - α zur Flächennormalen N ein Verhältnis von Transmissionsgrad T zu Reflexionsgrad R von 50 : 50 ± 10 % vorliegt und für einen Einfallswinkel von 3*α - 90° zur Flächennormalen N ist der Transmissionsgrad T grösser als 90 %. Idealerweise liegt das Verhältnis T : R bei 50 : 50 für einen Einfallswinkel von 90° - α zur Flächennormalen N und T ist gleich 99 % für einen Einfallswinkel von 3*α - 90° zur Flächennormalen N.

Die Zylinderoptik 55 ist zylinderförmig mit einer Zylinderachse **72** ausgebildet und weist eine plane Eintrittsfläche **73** und eine plane Austrittsfläche **74** auf. Die Kollimationsoptik 56 weist eine gekrümmte Eintrittsfläche **75** und eine plane Austrittsfläche **76** auf, die mit der Eintrittsfläche 73 der Zylinderoptik 55 zusammenfällt. Als optische Achse **77** der Kollimationsoptik 56 ist eine Gerade definiert, die durch den Krümmungsmittelpunkt der gekrümmten Eintrittsfläche 75 verläuft und senkrecht auf der planen Austrittsfläche 76 steht. Die Ein- und Austrittsflächen 73, 74, 75, 76 der Zylinderoptik 55 und der Kollimationsoptik 56 sind für die Wellenlänge und Polarisation der Laserstrahlquelle 11 als Transmissionsflächen ausgebildet.

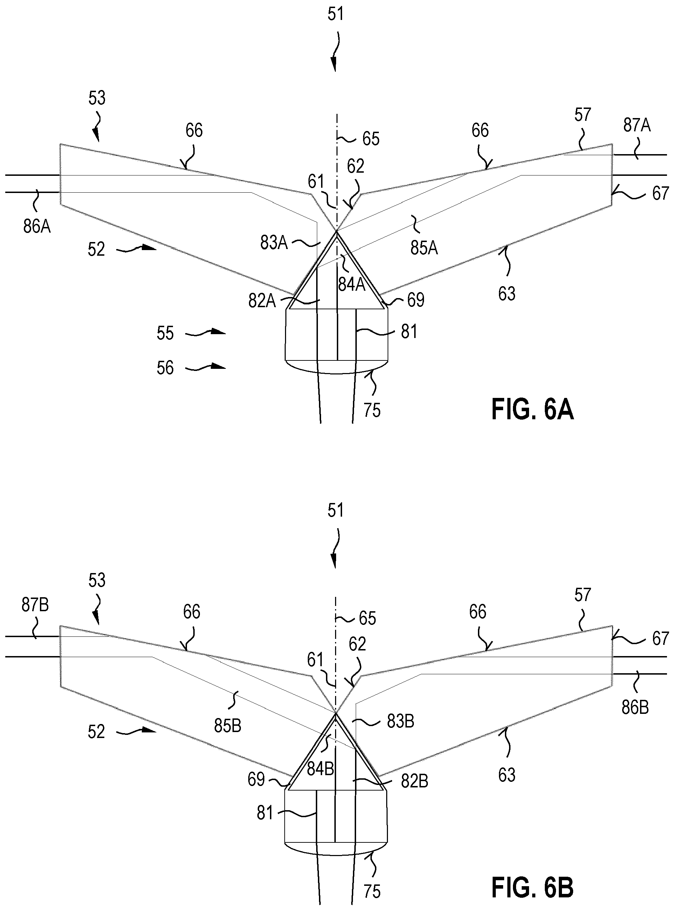

**FIGN. 6** **A, B** zeigen den Strahlengang eines Laserstrahls im erfindungsgemäßen optischen System 51, das im Lasersystem 10 der FIG. 1 das optische System 14 ersetzen kann. Das optische System 51 umfasst die erste Kegeloptik 52, die zweite Kegeloptik 53, die weitere Kegeloptik 54, die Zylinderoptik 55 und die Kollimationsoptik 56.

Die Laserstrahlquelle 11 erzeugt den divergenten Laserstrahl 15, der auf die gekrümmte Eintrittsfläche 75 trifft, die einen kollimierten Laserstrahl **81** formt. Der kollimierte Laserstrahl 81 propagiert durch die Zylinderoptik 55 und die weitere Kegeloptik 54 und trifft unter einem Einfallswinkel von 90° - α zur Flächennormalen N auf den Kegelmantel 69. Die Kegelspitze 70 unterteilt den Laserstrahl 81 in einen linken Laserstrahl **82A** und einen rechten Laserstrahl **82B,** die auf verschiedenen Wegen durch die erste und zweite Kegeloptik 52, 53 propagieren.

Der in FIG. 6A dargestellte linke Laserstrahl 82A wird in einen transmittierten Teilstrahl **83A** und einen reflektierten Teilstrahl **84A** aufgeteilt. Der transmittierte Teilstrahl 83A wird an der ersten inneren Mantelfläche 62 und der zweiten inneren Mantelfläche 66 zweifach durch Totalreflektion reflektiert und verlässt den Grundkörper 57 an der zweiten äusseren Mantelfläche 67 als umgelenkter unterer Teilstrahl **86A.**

Der reflektierte Teilstrahl 84A trifft unter einem Einfallswinkel von 3*α - 90° zur Flächennormalen N auf die gegenüberliegende rechte Seite des Kegelmantels 69. Da der Transmissionsgrad T für diesen Einfallswinkel grösser als 90 % ist, wird der reflektierte Teilstrahl 84A überwiegend transmittiert und tritt als Teilstrahl **85A** in die linke Hälfte des Grundkörpers 23 ein. Der Teilstrahl 85A wird an der zweiten inneren Mantelfläche 66 einfach durch Totalreflektion reflektiert und verlässt den Grundkörper 57 an der zweiten äusseren Mantelfläche 67 als umgelenkter oberer Teilstrahl **87A.**

Der in FIG. 6B dargestellte rechte Laserstrahl 82B wird in einen transmittierten Teilstrahl **83B** und einen reflektierten Teilstrahl **84B** aufgeteilt. Der transmittierte Teilstrahl 83B wird an der ersten inneren Mantelfläche 62 und der zweiten inneren Mantelfläche 66 zweifach durch Totalreflektion reflektiert und verlässt den Grundkörper 57 an der zweiten äusseren Mantelfläche 67 als umgelenkter unterer Teilstrahl **86B.**

Der reflektierte Teilstrahl 84B trifft unter einem Einfallswinkel von 3*α - 90° zur Flächennormalen N auf die gegenüberliegende linke Seite des Kegelmantels 69. Da der Transmissionsgrad T für diesen Einfallswinkel grösser als 90 % ist, wird der reflektierte Teilstrahl 84B überwiegend transmittiert und tritt als Teilstrahl **85B** in die rechte Hälfte des Grundkörpers 57 ein. Der Teilstrahl 85B wird an der zweiten inneren Mantelfläche 66 einfach durch Totalreflektion reflektiert und verlässt den Grundkörper 57 an der zweiten äusseren Mantelfläche 67 als umgelenkter oberer Teilstrahl **87B.**

Der umgelenkte untere Teilstrahl 86A und umgelenkte obere Teilstrahl 87B verlassen das optische System 51 und erzeugen eine linke 180°-Laserlinie. Der umgelenkte untere Teilstrahl 86B und umgelenkte obere Teilstrahl 87A verlassen das optische System 51 und erzeugen eine rechte 180°-Laserlinie. Die 360°-Laserlinie, die das optische System 51 erzeugt, wird aus der linken 180°-Laserlinie und rechten 180°-Laserlinie zusammengesetzt.

## Patentansprüche

1. Optisches System (14; 51) zur Erzeugung einer 360°-Laserline (50A, 50B), aufweisend:
▪ eine erste Kegeloptik (21; 52), die in Form eines ersten Negativkegelabschnitts mit einer ersten Kegelachse (26; 61) ausgebildet ist und die eine kegelförmige erste innere Mantelfläche (27; 62) mit einem ersten Öffnungswinkel (2*β₁), eine kegelförmige erste äussere Mantelfläche (28; 63) und eine erste Kegelspitze (29; 64) aufweist, und
▪ eine zweite Kegeloptik (22; 53), die in Form eines zweiten Negativkegelabschnitts mit einer zweiten Kegelachse (30; 65) ausgebildet ist und die eine kegelförmige zweite innere Mantelfläche (31; 66) mit einem zweiten Öffnungswinkel (2*β₂) und eine zweite äussere Mantelfläche (32; 67) aufweist,
**gekennzeichnet durch** eine weitere Kegeloptik (24; 54), die eine Kegelachse (33; 68), einen Kegelmantel (35; 69) mit einem Öffnungswinkel (2*α) und eine Kegelspitze (36; 70) aufweist, wobei der Öffnungswinkel (2*α) des Kegelmantels (35; 69) von 90° verschieden ist.

2. Optisches System nach Anspruch 1, **dadurch gekennzeichnet, dass** der Kegelmantel (35; 69) bei einem Einfallswinkel von 90°- α zur Flächennormalen (N) ein Verhältnis von Transmissionsgrad T zu Reflexionsgrad R von 50 : 50 ± 10 % aufweist.

3. Optisches System nach Anspruch 2, **dadurch gekennzeichnet, dass** der Kegelmantel (35; 69) bei einem Einfallswinkel von 3*α - 90° zur Flächennormalen (N) einen Transmissionsgrad T grösser als 90 % aufweist.

4. Optisches System nach einem der Ansprüche 1 bis 3, **dadurch gekennzeichnet, dass** der erste Öffnungswinkel (2*β₁) der ersten inneren Mantelfläche (27; 62) mit dem Öffnungswinkel (2*α) des Kegelmantels (35; 69) übereinstimmt.

5. Optisches System nach einem der Ansprüche 1 bis 4, **dadurch gekennzeichnet, dass** die erste Kegelspitze (29; 64) der ersten Kegeloptik (21; 52) mit der Kegelspitze (36; 70) der weiteren Kegeloptik (24; 54) zusammenfällt.

6. Optisches System nach einem der Ansprüche 1 bis 5, **dadurch gekennzeichnet, dass** die erste Kegeloptik (21; 52) in einen Grundkörper (23; 57) integriert ist, der eine kegelförmige Aussparung (41; 58) für die weitere Kegeloptik (24; 54) aufweist, wobei die Kegelform der Aussparung (41; 58) der weiteren Kegeloptik (24; 54) entspricht.

7. Optisches System nach Anspruch 6, **dadurch gekennzeichnet, dass** die zweite Kegeloptik (22; 53) in den Grundkörper (23; 57) integriert und mit der ersten Kegeloptik (21; 52) einteilig ausgebildet ist.

8. Optisches System nach einem der Ansprüche 1 bis 7, **dadurch gekennzeichnet, dass** die erste Kegelachse (25; 61) der ersten Kegeloptik (21; 52), die zweite Kegelachse (30; 65) der zweiten Kegeloptik (22; 53) und die Kegelachse (33) der weiteren Kegeloptik (24; 54) koaxial zueinander angeordnet.

9. Optisches System nach einem der Ansprüche 1 bis 8, **gekennzeichnet durch** eine Zylinderoptik (25; 55), die mit der weiteren Kegeloptik (24; 54) einteilig ausgebildet ist.

10. Lasersystem (10) zur Erzeugung einer 360° Laserline (50A, 50B), aufweisend eine Strahlquelle (11) und ein optisches System (14; 51) nach einem der Ansprüche 1 bis 9.

11. Lasersystem nach Anspruch 10, **dadurch gekennzeichnet, dass** der Laserstrahl (15), den die Strahlquelle (11) erzeugt, eine Strahlverteilung in Form einer Gauß-Verteilung, einer Lorentz-Verteilung oder einer Bessel-Verteilung aufweist.
